# EUROPEAN PATENT APPLICATION

(11) **EP 4 220 260 A1**
(43) Date of publication of application: **02.08.2023**
(21) Application number: 21872611.5
(22) Date of filing: 27.09.2021
(51) Int. Cl.: G02B 6/44

(54) **OPTICAL FIBER CABLE AND CABLE WITH CONNECTOR**

(30) Priority: 28.09.2020 JP 2020162360
(71) Applicant: SUMITOMO ELECTRIC INDUSTRIES, LTD., Osaka-shi, Osaka 541-0041 (JP)
(72) Inventor: SATO, Fumiaki, Osaka-shi, Osaka 541-0041 (JP); IWAGUCHI, Noriaki, Osaka-shi, Osaka 541-0041 (JP); TSUCHIYA, Kenta, Osaka-shi, Osaka 541-0041 (JP)
(74) Representative: Müller-Boré & Partner Patentanwälte PartG mbB
(86) International application number: PCT/JP2021/035382
(87) International publication number: WO 2022/065485

(57) **Abstract**

An optical fiber cable provided with a plurality of optical fiber cores and a sheath coating the periphery of the plurality of optical fiber cores. The number of optical fiber cores per unit area of the optical fiber cable in a cross-section of the optical fiber cable perpendicular to the longitudinal direction is larger than 6.3 cores/mm² and smaller than or equal to 12.6 cores/mm². The optical fiber cores each have an outer diameter of 175-185 µm inclusive.

## Description

### TECHNICAL FIELD

The present disclosure relates to an optical fiber cable and a cable with a connector.

The present application claims priority from Japanese Patent Application No. 2020-162360 filed on September 28, 2020, contents of which are incorporated by reference in its entirety.

### BACKGROUND ART

Patent Literature 1 discloses an optical fiber cable including an optical fiber ribbon. In the optical fiber ribbon, a plurality of optical fibers are integrated by a ribbon resin, and the ribbon resin is segmented by segmenting portions intermittently provided along a longitudinal direction of the optical fiber ribbon.

Patent Literature 2 discloses an optical fiber cable including an optical fiber ribbon. In the optical fiber ribbon, a plurality of optical fibers each including a plurality of cores are arranged in parallel, and coupling portions and non-coupling portions are intermittently formed in a longitudinal direction between adjacent optical fibers.

Patent Literature 3 discloses an optical fiber cable including an optical fiber ribbon. In the optical fiber ribbon, three or more optical fibers are arranged in parallel, and the optical fibers adjacent to one another are coupled by coupling portions. The coupling portions are provided intermittently in a longitudinal direction of the optical fibers. An outer diameter of each of the optical fibers is set to 220 µm or less, and a center-to-center distance between the adjacent optical fibers is set to 250 ± 30 µm.

### CITATION LIST

### PATENT LITERATURE

Patent Literature 1: JP2005-62427A
Patent Literature 2: JP2015-52704A
Patent Literature 3: JP2013-88617A

### SUMMARY OF INVENTION

### SOLUTION TO PROBLEM

An optical fiber cable according to the present disclosure includes
a plurality of optical fibers, and
a sheath coating a periphery of the plurality of optical fibers.

The number of the plurality of optical fibers per unit area of the optical fiber cable in a cross section orthogonal to a longitudinal direction of the optical fiber cable is more than 6.3 fibers/mm² and 12.6 fibers/mm² or less.

An outer diameter of each of the plurality of optical fibers is 175 µm or more and 185 µm or less.

A cable with a connector according to the present disclosure includes
the optical fiber cable, and
a multi-core connector provided at one end of at least a part of the plurality of optical fibers of the optical fiber cable.

### BRIEF DESCRIPTION OF DRAWINGS

[Fig. 1A] Fig. 1A is a cross-sectional view orthogonal to a longitudinal direction of an optical fiber cable according to a first embodiment.
[Fig. 1B] Fig. 1B is a cross-sectional view showing an optical fiber unit in Fig. 1A.
[Fig. 1C] Fig. 1C is a cross-sectional view showing an optical fiber in Fig. 1B.
[Fig. 2] Fig. 2 is a graph showing a relation between the number of optical fibers per unit area of the optical fiber cable and transmission attenuation characteristics in a low temperature environment.
[Fig. 3] Fig. 3 is a splicing diagram schematically showing a state in which the optical fiber cable shown in Fig. 1A is spliced to another optical fiber cable.
[Fig. 4] Fig. 4 is a cross-sectional view showing a modification of the optical fiber unit.
[Fig. 5] Fig. 5 is a cross-section of an optical fiber ribbon used in the optical fiber unit shown in Fig. 4.
[Fig. 6] Fig. 6 is a schematic view showing a state when the optical fiber ribbon shown in Fig. 5 is set in a fusion splicer.
[Fig. 7] Fig. 7 is a partially developed view showing a modification of the optical fiber ribbon in the longitudinal direction.
[Fig. 8] Fig. 8 is a cross-sectional view orthogonal to a longitudinal direction of the optical fiber showing a modification of the optical fiber.
[Fig. 9] Fig. 9 is a perspective view schematically showing a state in which the optical fiber unit shown in Fig. 1B is subjected to termination processing.

### DESCRIPTION OF EMBODIMENTS

### [Problems to be Solved by Present Disclosure]

The present disclosure provides an optical fiber cable and a cable with a connector capable of mounting an optical fiber at a high density and preventing an increase in transmission attenuation in a low temperature environment.

### [Effects of Present Disclosure]

According to the present disclosure, it is possible to provide an optical fiber cable and a cable with a connector capable of mounting an optical fiber at a high density and preventing an increase in transmission attenuation in a low temperature environment.

### [Description of Embodiments of Present Disclosure]

First, an embodiment of the present disclosure will be listed and described.
(1) An optical fiber cable according to the present disclosure includes
   a plurality of optical fibers, and
   a sheath coating a periphery of the plurality of optical fibers.

The number of the plurality of optical fibers per unit area of the optical fiber cable in a cross section orthogonal to a longitudinal direction of the optical fiber cable is more than 6.3 fibers/mm² and 12.6 fibers/mm² or less.

An outer diameter of each of the plurality of optical fibers is 175 µm or more and 185 µm or less.

According to such a configuration, the optical fibers may be mounted at a high density, and an increase in transmission attenuation in a low temperature environment may be prevented.

(2) A plurality of assemblies in which at least a part of the plurality of optical fibers is bundled may be further provided.

According to such a configuration, discrimination and handling of the optical fibers are facilitated. "At least a part" means that some of the plurality of optical fibers may be bundled, or that the plurality of optical fibers may be bundled in a part of the longitudinal direction.

(3) A plurality of tubes each having a thickness of 0.3mm or less may be further provided.

Each of the plurality of tubes may cover peripheries of corresponding one of the plurality of assemblies.

According to such a configuration, the optical fibers may be protected by the tubes. Since the thickness of the tube is thin, it is possible to prevent a decrease in a space in which the optical fibers may be mounted due to the arrangement of the tubes.

(4) The plurality of optical fibers may form a plurality of optical fiber ribbons arranged in parallel in a direction orthogonal to a longitudinal direction of the plurality of optical fibers and coupled by a coupling resin.

In each of the plurality of optical fiber ribbons, a pitch average value among the optical fibers may be 220 µm or more and 280 µm or less.

The plurality of optical fiber ribbons may form the plurality of assemblies.

According to such a configuration, it is possible to use a fusion splicer in which a V-groove pitch is set to 250 µm at the time of fusion splicing the optical fibers. Since an optical fiber having an outer diameter of 175 µm or more and 185 µm or less is used, it is possible to prevent an increase in an area of the optical fiber ribbon in a cross section orthogonal to the longitudinal direction of the optical fiber cable.

(5) A first lid covering a periphery of a part of the plurality of optical fibers, and a second lid covering a periphery of another part of the plurality of optical fibers arranged outside the first lid may be further provided.

The first lid and the second lid may have water absorbency.

According to such a configuration, it is possible to discriminate between the optical fiber arranged inside the first lid and the optical fiber arranged outside the first lid. In addition, the waterproof property of the optical fiber cable may be improved.

(6) A plurality of tension members embedded in the sheath may be further provided.

According to such a configuration, it is possible to prevent contraction of the sheath in a low temperature environment.

(7) Each of the plurality of optical fibers may have a plurality of cores.

According to such a configuration, it is possible to increase the number of cores per unit area of the optical fiber cable in the cross section orthogonal to the longitudinal direction of the optical fiber cable.

(8) A cable with a connector according to the present disclosure includes
the optical fiber cable, and
a multi-core connector provided at one end of at least a part of the plurality of optical fibers of the optical fiber cable.

According to such a configuration, an operation of splicing the optical fiber cable to another communication member is facilitated.

### [Details of Embodiments of Present Disclosure]

Specific examples of an optical fiber cable and a cable with a connector according to the present disclosure will be described with reference to the drawings. The present disclosure is not limited to these examples but defined by the scope of the claims, and is intended to include all modifications within the scope and meaning equivalent to the scope of the claims.

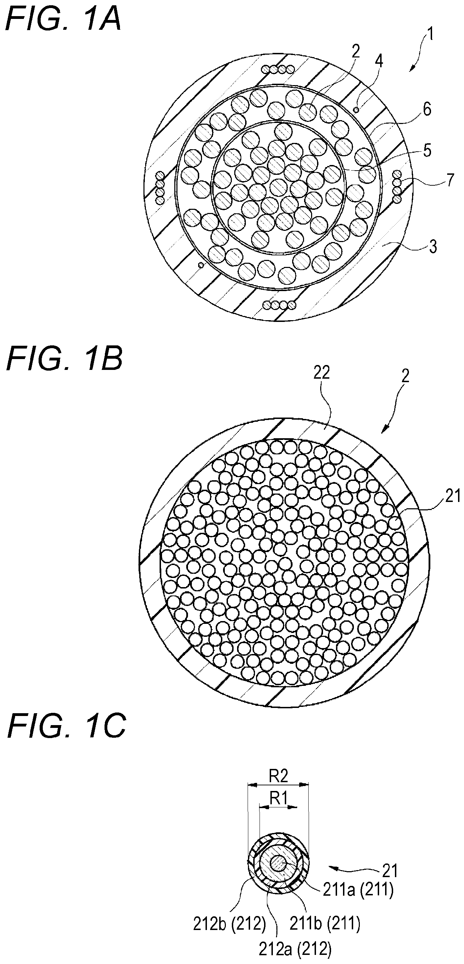

A configuration of an optical fiber cable 1 according to an embodiment will be described with reference to Figs. 1A to 1C. In Fig. 1A, optical fiber units 2 are hatched and an internal configuration thereof is omitted, and the omitted internal configuration of the optical fiber unit 2 is shown in Fig. 1B.

As shown in Fig. 1A, the optical fiber cable 1 includes the plurality of optical fiber units 2 and a sheath 3. In this example, 64 optical fiber units 2 are mounted inside the sheath 3.

As shown in Fig. 1B, each of the optical fiber units 2 includes a plurality of optical fibers 21 and a tube 22. The plurality of optical fibers 21 are bundled to form an assembly. The tube 22 covers a periphery of the assembly of the optical fibers 21. In this example, 216 single-core optical fibers 21 are bundled to form an assembly. The single-core optical fibers 21 forming the assembly may be stranded together. The tube 22 is formed of, for example, a resin such as elastomer or polyethylene. The tube 22 has a thickness of 0.3 mm or less.

As shown in Fig. 1C, each of the optical fibers 21 includes a glass fiber 211 and a coating portion 212 that covers a periphery of the glass fiber 211. Examples of the optical fiber 21 include an optical fiber of ITU-T G.657A2. The glass fiber 211 is, for example, a single-core optical fiber in which one core 211a is arranged in a cladding 211b, and has an outer diameter R1 of, for example, 125 µm. The coating portion 212 is formed of one or a plurality of coating layers made of a resin such as an ultraviolet curable resin. In this example, the coating portion 212 includes an inner coating layer 212a and an outer coating layer 212b. The inner coating layer 212a may be formed of a soft resin having a relatively low Young's modulus. The outer coating layer 212b may be formed of a hard resin having a relatively high Young's modulus.

The sheath 3 coats a periphery of the plurality of optical fiber units 2. The sheath 3 is formed of, for example, a hard resin having a relatively high Young's modulus, such as high-density polyethylene. Tear strings 4 may be embedded in the sheath 3.

In the optical fiber cable 1 as described above, each of the optical fibers 21 has an outer diameter R2 of 175 µm or more and 185 µm or less. The optical fibers 21 are mounted in the optical fiber cable 1 such that the number of the plurality of optical fibers 21 per unit area of the optical fiber cable 1 in a cross section orthogonal to the longitudinal direction of the optical fiber cable 1 is more than 6.3 fibers/mm² and 12.6 fibers/mm² or less. In the present specification, the area of the optical fiber cable 1 in the cross section orthogonal to the longitudinal direction of the optical fiber cable 1 (that is, cross-sectional area of the optical fiber cable 1) is a cross-sectional area of the optical fiber cable 1 including the sheath 3. That is, a value obtained by dividing the number of the optical fibers 21 mounted in the optical fiber cable 1 by the cross-sectional area of the optical fiber cable 1 calculated based on the outer diameter of the sheath 3 is more than 6.3 fibers/mm² and 12.6 fibers/mm² or less. For example, in a case where the optical fiber cable 1 in which 13824 optical fibers 21 shown in Fig. 1A are mounted is manufactured such that the outer diameter of the sheath 3 is 37.5 mm, the number of the plurality of optical fibers 21 per unit area of the optical fiber cable 1 in the cross section orthogonal to the longitudinal direction of the optical fiber cable 1 is 12.52 fibers/mm².

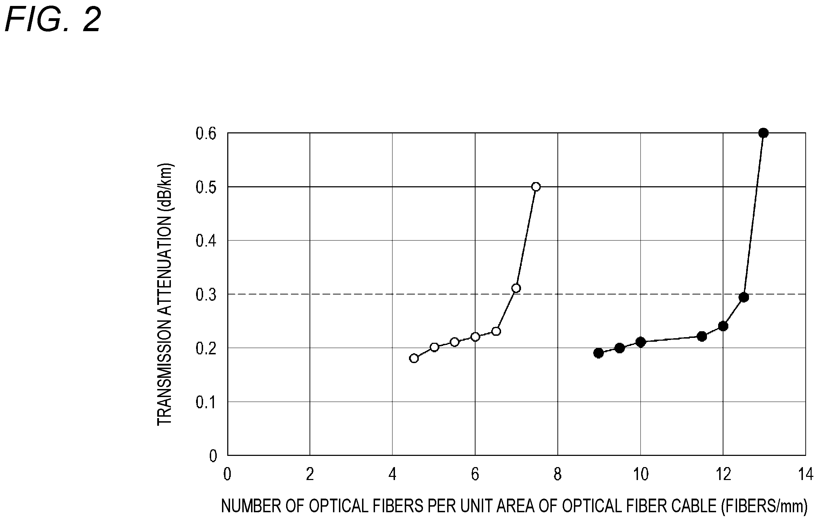

Fig. 2 shows evaluation results of transmission attenuation in a low temperature environment. In Fig. 2, a horizontal axis represents the number of the optical fibers per unit area of the optical fiber cable. A vertical axis represents the transmission attenuation when a wavelength of a signal light is 1.55 µm in a state where the optical fiber cable is in a low temperature (-40°C) environment. A black circle indicates transmission attenuation in a case where 13824 optical fibers having an outer diameter of 185 µm are accommodated in the optical fiber cable 1 in Fig. 1A. A white circle indicates transmission attenuation in a case where 6912 optical fibers having an outer diameter of 200 µm are accommodated in a slot groove in a slot-type cable including a slot rod. Seven pieces of data for both the black circle and the white circle are data acquired by changing the number of the optical fibers per unit area of the optical fiber cable by changing a cable diameter without changing the number of the optical fibers.

As shown in Fig. 2, the transmission attenuation increases as the number of the optical fibers per unit area of the optical fiber cable increases in both the optical fiber cable 1 according to the present embodiment and the slot-type cable. In a case where the number of the optical fibers per unit area of the optical fiber cable exceeds a certain value, the influence of a lateral pressure on the optical fiber cable is increased, and the transmission attenuation is significantly increased. In the optical fiber cable 1 according to the present embodiment, in a case where the number of the optical fibers 21 per unit area of the optical fiber cable 1 is 12.6 fibers/mm² or less, the transmission attenuation is 0.3 dB/km or less, and it is found that the transmission attenuation characteristics are good. In a case where the optical fiber 21 having an outer diameter of less than 185 µm is used in the optical fiber cable 1, the same effect may be expected. In a case where the outer diameter of the optical fiber 21 is less than 175 µm, the thickness of the coating portion 212 is less than 25 µm in a case where the outer diameter of the glass fiber is 125 µm, and thus the outer diameter of the optical fiber 21 is preferably 175 µm or more from the viewpoint of protecting the glass fiber 211.

In this way, in the optical fiber cable 1 according to the present embodiment, the number of the optical fiber 21 per unit area of the optical fiber cable 1 is set to 12.6 fibers/mm² or less while mounting the optical fibers 21 at high density using the optical fiber 21 having a small diameter with an outer diameter of 175 µm or more and 185 µm or less, thereby preventing an increase in transmission attenuation in a low temperature environment.

In the present embodiment, the optical fiber cable 1 includes the plurality of optical fiber units 2 each including an assembly in which the plurality of optical fibers 21 are bundled. The optical fiber unit 2 may include one assembly or a plurality of assemblies. Accordingly, discrimination and handling of the optical fibers 21 in the optical fiber cable 1 are facilitated. In a case where the plurality of optical fibers 21 forming the assembly are stranded together, bending strain when the optical fiber cable 1 is bent is alleviated.

In the optical fiber cable 1 according to the present embodiment, the periphery of the assembly of the optical fibers 21 is coated with the tube 22. Accordingly, the optical fibers 21 may be protected. On the other hand, since the thickness of the tube 22 is thin, it is possible to prevent a decrease in the space in which the optical fibers 21 may be mounted due to the arrangement of the tube 22. In addition, workability is improved in a case where the optical fibers 21 of the optical fiber cable 1 are spliced to another member.

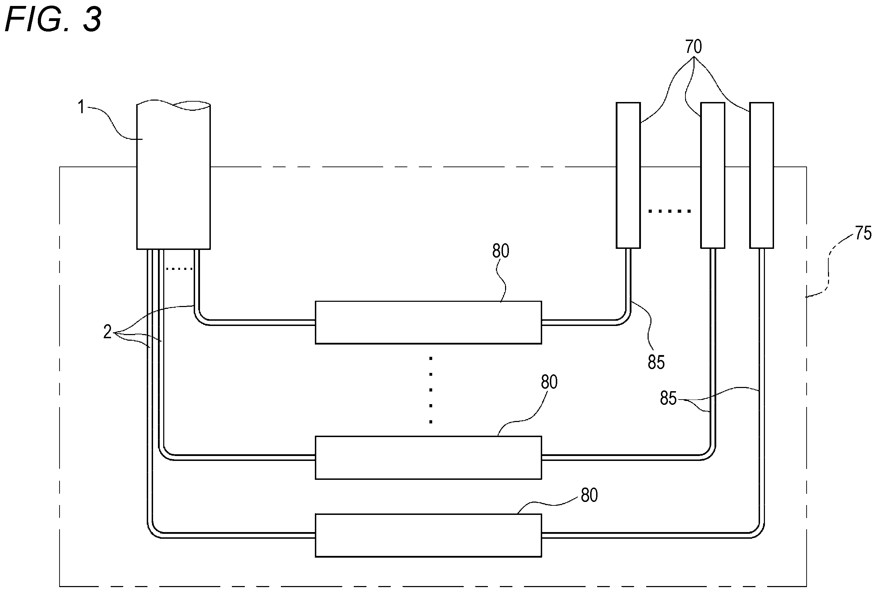

For example, Fig. 3 is a splicing diagram schematically showing a state in which the optical fiber cable 1 is spliced to other optical fiber cables 70. As shown in Fig. 3, the optical fiber units 2 are led out from the optical fiber cable 1, which is introduced into an optical splicing box 75, and are respectively arranged in splice relays 80. In each of the splice relays 80, the optical fibers 21 are spliced to optical fibers of another optical fiber unit 85 led out from the optical fiber cable 70. At this time, since the plurality of optical fibers 21 are accommodated in the tube 22, the optical fibers 21 may be taken out from the optical fiber cable 1 for each optical fiber unit 2. Therefore, the optical fibers 21 may be discriminated without separating from one another.

The optical fiber unit 2 may include, instead of the tube 22, a bundling member wound around the assembly of the optical fibers 21. Even in such a case, discrimination of the optical fibers 21 becomes easy.

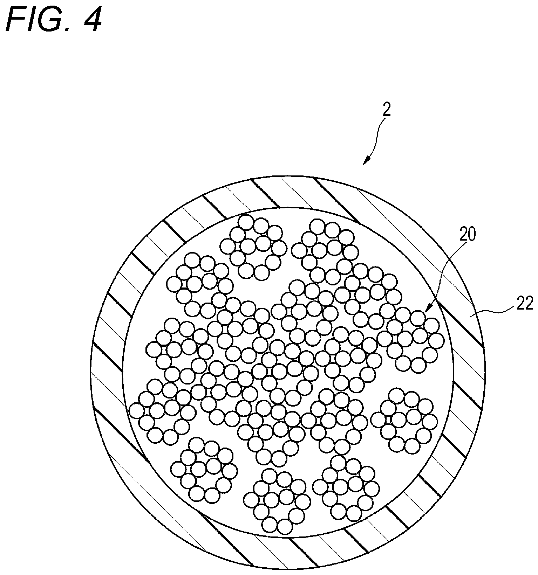

The optical fiber unit 2 may be formed by a plurality of optical fiber ribbons 20 and the tube 22 as shown in Fig. 4, instead of being formed by the optical fibers 21 and the tube 22 in Fig. 1B. In this example, the optical fiber unit 2 is formed of 18 optical fiber ribbons 20. The optical fiber ribbons 20 may be stranded together.

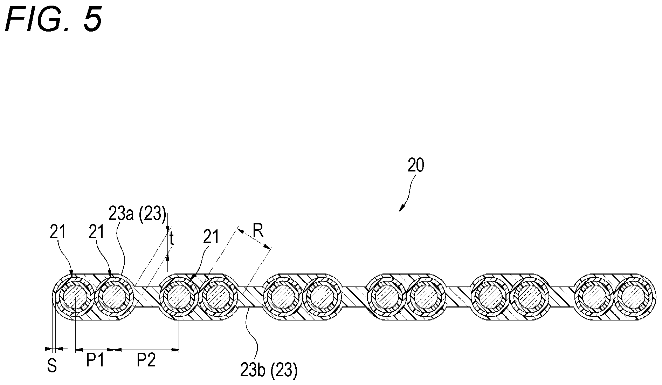

As shown in Fig. 5, each of the optical fiber ribbons 20 is formed by coupling the plurality of optical fibers 21. Specifically, the optical fiber ribbon 20 includes the plurality of optical fibers 21 arranged in parallel in a direction orthogonal to the longitudinal direction, and a coupling resin 23 that couples the plurality of optical fibers 21. In this example, in twelve optical fibers 21, a state in which adjacent optical fibers 21 are separated from each other by a certain distance and a state in which adjacent optical fibers 21 are in contact with each other are alternately repeated every two cores. In the plurality of optical fibers 21, a pitch average value among the optical fibers 21 is 220 µm or more and 280 µm or less. For example, in the plurality of optical fibers 21, a center-to-center distance P1 of the optical fibers 21 in contact with each other is 185 µm, and a center-to-center distance P2 of the optical fibers 21 separated by a certain distance is 315 µm.

The coupling resin 23 is formed of an ultraviolet curable resin, a thermosetting resin, or the like. In this example, the coupling resin 23 includes outer peripheral coating portions 23a that cover an outer periphery of the optical fibers 21, and bridge portions 23b. Each of the bridge portions 23b bridges the optical fibers 21 separated from each other by a certain distance. In the bridge portion 23b, a thickness t (thickness in a direction orthogonal to a parallel direction of the optical fibers 21) thereof is smaller than a thickness of the optical fiber ribbon 20 obtained by adding an outer diameter R of the optical fiber 21 and a thickness S of the outer peripheral coating portion 23a. For example, in the coupling resin 23, the thickness t of the bridge portion 23b is 90 µm and the thickness (R+2S) of the optical fiber ribbon 20 is 205 µm.

According to such a configuration, since the optical fiber ribbon 20 is formed of the optical fibers 21 having an outer diameter of 175 µm or more and 185 µm or less, it is possible to prevent an increase in an area of the optical fiber ribbon 20 in the cross section orthogonal to the longitudinal direction of the optical fiber cable 1. In a case where the thickness t of the bridge portion 23b is smaller than the thickness (R+2S) of the optical fiber ribbon 20, a cross-sectional area of the optical fiber ribbon 20 may be further reduced.

In a case where the plurality of optical fiber ribbons 20 are stranded together, bending strain when the optical fiber cable 1 is bent is alleviated. In addition, in a case where the optical fiber unit 2 is taken out from the optical fiber cable 1, the optical fiber ribbons 20 are less likely to be separated.

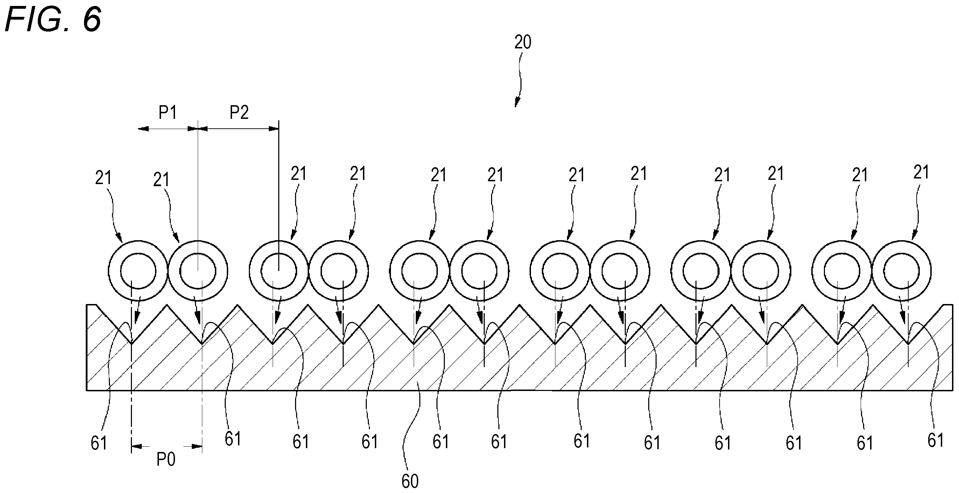

Since the pitch average value among the optical fibers 21 is 220 µm or more and 280 µm or less, it is possible to use a fusion splicer in which the V-groove pitch is set to 250 µm at the time of fusion splicing the optical fibers 21 of the optical fiber ribbon 20. Fig. 6 shows a step of setting the optical fibers 21 in a V-groove block 60 of the fusion splicer in which a V-groove pitch P0 is set to 250 µm. In the optical fiber ribbon 20, the center-to-center distance P1 between the optical fibers 21 in a state where the adjacent optical fibers 21 are in contact with each other is smaller than the pitch P0 of V-grooves 61. On the other hand, the center-to-center distance P2 between the optical fibers 21 in a state where the bridge portion 23b is provided between the adjacent optical fibers 21 is larger than the pitch P0 of the V-grooves 61. That is, since an average center-to-center distance among the adjacent optical fibers 21 is approximately 250 µm in the optical fiber ribbon 20, the optical fibers 21 are guided in directions of arrows shown in Fig. 6 along groove walls of the V-grooves 61, respecively, in a case where being pushed down by a clamp lid (not shown). Accordingly, the optical fibers 21 are sequentially accommodated in the V-grooves 61 one by one. Therefore, the optical fiber cable 1 may correspond to the fusion splicer in which the V-groove pitch is set to 250 µm.

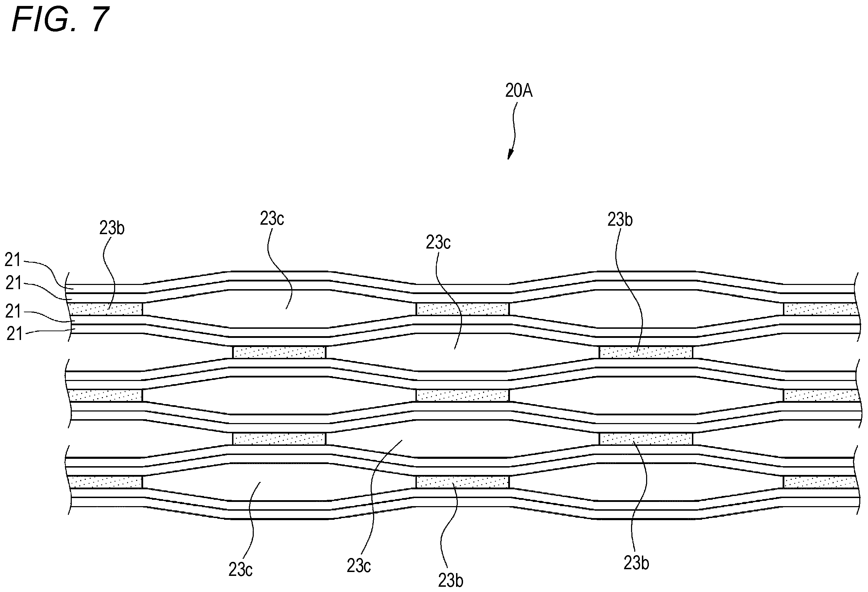

As shown in Fig. 7, the bridge portions 23b and segmenting portions 23c may be intermittently provided in the longitudinal direction in the optical fiber ribbon 20. That is, in the optical fiber ribbon 20A in Fig. 7, the bridge portions 23b may include the segmenting portions 23c intermittently in the longitudinal direction of the optical fiber ribbon 20A. According to such a configuration, the optical fiber ribbon 20A is more easily deformed than the optical fiber ribbon 20 in Fig. 5. In addition, since the optical fiber ribbon 20A may be easily torn from the segmenting portion 23c as a starting point, the optical fibers 21 may be easily separated.

In the present embodiment, the optical fiber cable 1 may include a first lid 5 and a second lid 6 as shown in Fig. 1A. The first lid 5 covers the periphery of the plurality of optical fiber units 2 arranged in the vicinity of a central portion of the optical fiber cable 1. The second lid 6 covers the periphery of the plurality of optical fiber units 2 arranged in the periphery of the first lid 5. In this example, 32 optical fiber units 2 (6912 optical fibers 21) are arranged inside the first lid 5, and 32 optical fiber units 2 (6912 optical fibers 21) are arranged outside the first lid 5. The first lid 5 and the second lid 6 are wrapped in the periphery of the plurality of optical fiber units 2 in a longitudinal or spiral manner. Being wrapped in a longitudinal manner means a state in which a lid is wrapped in an outer periphery of an optical fiber unit such that a longitudinal direction of the lid is parallel to the longitudinal direction of the optical fiber cable 1 and a width direction of the lid is along a circumferential direction of the optical fiber cable 1. The first lid 5 and the second lid 6 may have water absorbency. The first lid 5 and the second lid 6 are formed by attaching water-absorbent powder to a base fabric made of, for example, polyester.

According to such a configuration, it is possible to discriminate between the optical fiber unit 2 arranged inside the first lid 5 and the optical fiber unit 2 arranged outside the first lid 5. In addition, in a case where the first lid 5 and the second lid 6 have water absorbency, it is possible to improve the waterproof characteristics of the optical fiber cable 1. That is, it is possible to prevent the water entering from the outside of the cable from entering the inside of the second lid 6. In addition, it is possible to prevent water entering beyond the second lid 6 from entering the inside of the first lid 5.

In the present embodiment, the optical fiber cable 1 may include a plurality of tension members 7 as shown in Fig. 1A. The plurality of tension members 7 are embedded in the sheath 3. The tension member 7 is formed of, for example, a fiber-reinforced plastic (FRP) such as aramid FRP, glass FRP, or carbon FRP, or a metal wire. According to such a configuration, it is possible to prevent contraction of the sheath 3 under a low temperature environment.

Although the present disclosure is described in detail with reference to a specific embodiment, it will be apparent to those skilled in the art that various changes and modifications may be made without departing from the spirit and scope of the present disclosure. The numbers, positions, shapes and the like of components described above are not limited to the above embodiment and may be changed to suitable numbers, positions, shapes and the like on a premise that the present disclosure is carried out.

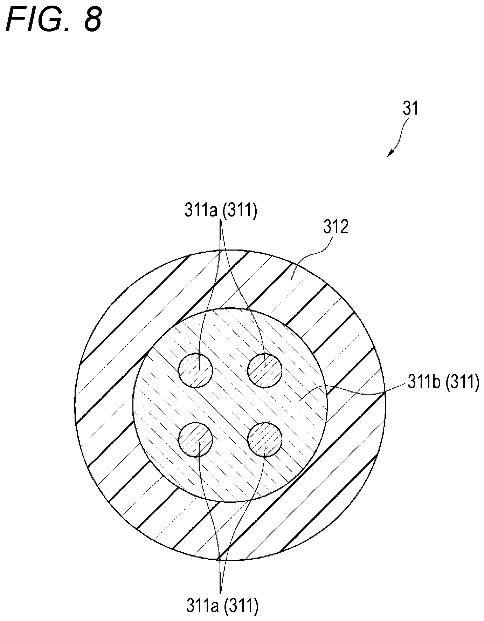

In the above embodiment, the optical fiber cable 1 may include a multi-core optical fiber 31 shown in Fig. 8 instead of the single-core optical fiber 21. The optical fiber 31 in Fig. 8 includes a glass fiber 311 and a coating portion 312. The glass fiber 311 includes a plurality of cores 311a in a cladding 311b. The coating portion 312 is formed of one or two coating layers. In this example, four cores 311a are arranged in the cladding 311b. According to such a configuration, by using the multi-core optical fiber 31 instead of the single-core optical fiber 21, it is possible to increase the number of cores per unit area of the optical fiber cable 1 in the cross section orthogonal to the longitudinal direction of the optical fiber cable 1 without changing the number of the optical fiber. In the optical fiber cable 1 in Fig. 1A, for example, in a case where the optical fiber 31 including four cores 311a in Fig. 8 is mounted, in a case where the number of the optical fibers of the optical fiber cable 1 is 12.6 fibers/mm², the number of cores per unit area of the optical fiber cable 1 is 50.4 cores/mm². The number of the cores 311a arranged in the cladding 311b is not limited to four, and for example, two or eight cores 311a may be arranged in the cladding 311b.

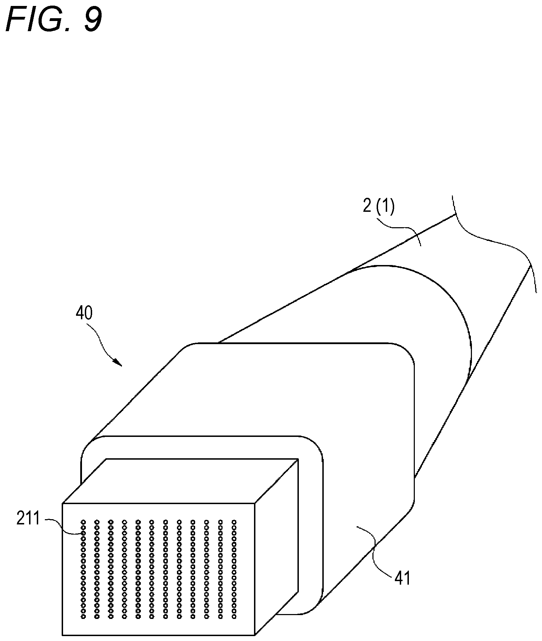

As shown in Fig. 9, the optical fiber cable 1 according to the above embodiment may be formed as a cable 40 with a connector. The cable 40 with a connector includes the optical fiber cable 1 and a multi-core connector 41. The multi-core connector 41 is provided at one end of at least one optical fiber unit 2 of the optical fiber cable 1. In this example, the multi-core connector 41 is coupled to the optical fiber unit 2. By coupling the multi-core connector 41 to the optical fiber unit 2 in advance, workability at the time of optically splicing the optical fiber cable 1 may be facilitated.

In the above embodiment, in the optical fiber ribbon 20, twelve optical fibers 21 are arranged such that a state in which the adjacent optical fibers 21 are separated from each other by a certain distance and a state in which the adj acent optical fibers 21 are in contact with each other are alternately repeated every two cores. However, the number of the optical fibers 21 and the contact state between the adjacent optical fibers 21 are not limited to the structure in Fig. 5, and may be changed as appropriate.

In the above embodiment, the optical fiber unit 2 includes 18 optical fiber ribbons 20 or 216 single-core optical fibers 21. However, the number of the optical fiber ribbons 20 and the number of the optical fibers 21 included in the optical fiber unit 2 may be appropriately changed. For example, the optical fiber unit 2 may include three or more optical fiber ribbons 20 each including twelve optical fibers 21, or may include twelve or more single-core optical fibers 21.

In the above embodiment, the optical fiber cable 1 is a slotless cable including no slot rod. However, in a case where the number of the optical fibers per unit area of the optical fiber cable is more than 6.3 fibers/mm² and 12.6 fibers/mm² or less, the optical fiber cable 1 may be a slot-type cable including a slot rod.

In the above embodiment, the plurality of optical fiber units 2 may be stranded together along the longitudinal direction of the optical fiber cable 1.

### REFERENCE SIGNS LIST

1: optical fiber cable
2: optical fiber unit
3: sheath
4: tear string
5: first lid
6: second lid
7: tension member
20: optical fiber ribbon
20A: optical fiber ribbon
21: optical fiber
22: tube
23: coupling resin
23a: outer coating portion
23b: bridge portion
23c: segmenting portion
31: optical fiber
40: cable with connector
41: multi-core connector
60: V-groove block
61: V groove
70: optical fiber cable
75: optical splicing box
80: splice tray
211: glass fiber
211a: core
311b: cladding
212: coating portion
212a: inner coating layer
212b: outer coating layer
311: glass fiber
311a: core
311b: cladding
312: coating portion
P0: V-groove pitch
P1: center-to-center distance
P2: center-to-center distance
R1: outer diameter of glass fiber
R2: outer diameter of optical fiber

## Claims

1. An optical fiber cable comprising:
a plurality of optical fibers, and
a sheath coating a periphery of the plurality of optical fibers, wherein
the number of the plurality of optical fibers per unit area of the optical fiber cable in a cross section orthogonal to a longitudinal direction of the optical fiber cable is more than 6.3 fibers/mm² and 12.6 fibers/mm² or less, and
an outer diameter of each of the plurality of optical fibers is 175 µm or more and 185 µm or less.

2. The optical fiber cable according to claim 1, further comprising:
a plurality of assemblies in which at least a part of the plurality of optical fibers is bundled.

3. The optical fiber cable according to claim 2, further comprising:
a plurality of tubes each having a thickness of 0.3mm or less, wherein
each of the plurality of tubes covers periphery of corresponding one of the plurality of assemblies.

4. The optical fiber cable according to claim 2 or 3, wherein
the plurality of optical fibers form a plurality of optical fiber ribbons arranged in parallel in a direction orthogonal to a longitudinal direction of the plurality of optical fibers and coupled by a coupling resin,
in each of the plurality of optical fiber ribbons, a pitch average value among the optical fibers is 220 µm or more and 280 µm or less, and
the plurality of optical fiber ribbons form the plurality of assemblies.

5. The optical fiber cable according to any one of claims 1 to 4, further comprising:
a first lid covering a periphery of a part of the plurality of optical fibers, and
a second lid covering a periphery of another part of the plurality of optical fibers arranged outside the first lid, wherein
the first lid and the second lid have water absorbency.

6. The optical fiber cable according to any one of claims 1 to 5, further comprising:
a plurality of tension members embedded in the sheath.

7. The optical fiber cable according to any one of claims 1 to 6, wherein
each of the plurality of optical fibers includes a plurality of cores.

8. A cable with a connector, comprising:
the optical fiber cable according to any one of claims 1 to 7, and
a multi-core connector provided at one end of at least a part of the plurality of optical fibers of the optical fiber cable.
